# EUROPEAN PATENT APPLICATION

(11) **EP 3 385 519 A1**
(43) Date of publication of application: **10.10.2018**
(21) Application number: 18165767.7
(22) Date of filing: 04.04.2018
(51) Int. Cl.: F01N 3/20, F01N 11/00, F02D 41/22, F02D 41/06, F02D 41/08, F02D 41/14, F02D 41/16, F02D 41/00, F02D 41/12

(54) **EXHAUST PURIFICATION SYSTEM OF INTERNAL COMBUSTION ENGINE**

(30) Priority: 04.04.2017 JP 2017074747
(71) Applicant: Toyota Jidosha Kabushiki Kaisha, Aichi-Ken 471-8571 (JP)
(72) Inventor: HAYASHITA, Go, Toyota-shi, Aichi-ken 471-8571 (JP); YODA, Kimikazu, Toyota-shi, Aichi-ken 471-8571 (JP)
(74) Representative: D Young & Co LLP

(57) **Abstract**

The exhaust purification system of an internal combustion engine 100, 100', 100" comprises: a catalyst 20 arranged in an exhaust passage 22 and able to store oxygen; an ammonia detection device 46, 71 and an air-fuel ratio detection device 41, 72 arranged in the exhaust passage at a downstream side of the catalyst; and an air-fuel ratio control part configured to control an air-fuel ratio of exhaust gas flowing into the catalyst to a target air-fuel ratio. The air-fuel ratio control part performs rich control making the target air-fuel ratio richer than a stoichiometric air-fuel ratio, in the rich control, reduces a rich degree of the target air-fuel ratio when an output value of the ammonia detection device rises to a reference value, and ends the rich control when an air-fuel ratio detected by the air-fuel ratio detection device falls to a rich judged air-fuel ratio.

## Description

### Technical Field

The present invention relates to an exhaust purification system of an internal combustion engine.

### Background Art

It has been known in the past to place a catalyst able to store oxygen in an exhaust passage of an internal combustion engine and remove unburned gases (HC, CO, etc.,) and NO_{X} in exhaust gas in the catalyst (for example, PLT 1). The higher the oxygen storage ability of the catalyst, the greater the amount of oxygen which can be stored in the catalyst and better the exhaust purification performance of the catalyst.

In order to maintain the oxygen storage ability of a catalyst, the oxygen storage amount of the catalyst is preferably periodically made zero so that the state where oxygen is stored in the catalyst is not maintained over a long period of time. Further, in order to completely release the oxygen stored in the catalyst, it is necessary to make exhaust gas of an air-fuel ratio with a high rich degree flow into the catalyst. On the other hand, the higher the rich degree of the air-fuel ratio of the exhaust gas, the greater the amount of unburned gas flowing out from the catalyst when the oxygen storage amount of the catalyst approaches zero and the more the exhaust emission deteriorates.

For this reason, in the internal combustion engine described in PLT 1, when performing rich control making the air-fuel ratio of the exhaust gas flowing into the catalyst rich to release the oxygen stored in the catalyst, the air-fuel ratio of the exhaust gas is controlled in two stages. Specifically, in the rich control, the rich degree of the air-fuel ratio of the exhaust gas is made smaller when the estimated value of the oxygen storage amount of the catalyst becomes a reference storage amount or less.

### Citation List

### Patent Literature

PLT 1. WO2014/118889A

### Summary of Invention

### Technical Problem

However, in the internal combustion engine described in PLT 1, in the rich control, the time period during which the rich degree of the air-fuel ratio of the exhaust gas is made high is much shorter than the time period during which the rich degree of the air-fuel ratio of the exhaust gas is made low. For this reason, the amount of oxygen remaining in the catalyst even after the rich control without being released from the catalyst during the rich control becomes greater, and a drop in the oxygen storage ability of the catalyst cannot be effectively suppressed.

Therefore, an object of the present invention is to provide an exhaust purification system of an internal combustion engine able to suppress deterioration of the exhaust emission while suppressing a drop in the oxygen storage ability of the catalyst.

### Solution to Problem

The summary of the present disclosure is as follows.
(1) An exhaust purification system of an internal combustion engine comprising: a catalyst arranged in an exhaust passage of the internal combustion engine and able to store oxygen; an ammonia detection device arranged in the exhaust passage at a downstream side of the catalyst in a direction of flow of exhaust; an air-fuel ratio detection device arranged in the exhaust passage at the downstream side of the catalyst in the direction of flow of exhaust; and an air-fuel ratio control part configured to control an air-fuel ratio of inflowing exhaust gas flowing into the catalyst to a target air-fuel ratio, wherein the air-fuel ratio control part is configured to perform rich control making the target air-fuel ratio richer than a stoichiometric air-fuel ratio, in the rich control, reduce a rich degree of the target air-fuel ratio when an output value of the ammonia detection device rises to a reference value, and end the rich control when an air-fuel ratio detected by the air-fuel ratio detection device falls to a rich judged air-fuel ratio richer than the stoichiometric air-fuel ratio.
(2) The exhaust purification system of an internal combustion engine described in above (1), wherein the air-fuel ratio control part is configured to alternately perform lean control making the target air-fuel ratio leaner than the stoichiometric air-fuel ratio and the rich control.
(3) The exhaust purification system of an internal combustion engine described in above (1) or (2), further comprising a temperature detection part configured to detect or estimate a temperature of the catalyst or a temperature of exhaust gas flowing out from the catalyst, wherein the air-fuel ratio control part is configured to reduce the rich degree of the target air-fuel ratio before the output value of the ammonia detection device rises to the reference value in the rich control the higher the temperature detected or estimated by the temperature detection part.
(4) The exhaust purification system of an internal combustion engine described in any one of above (1) to (3), further comprising a temperature detection part configured to detect or estimate a temperature of the catalyst or a temperature of exhaust gas flowing out from the catalyst, wherein in the rich control, if the temperature detected or estimated by the temperature detection part reaches a predetermined temperature before the output value of the ammonia detection device rises to the reference value, the air-fuel ratio control part is configured to reduce the rich degree of the target air-fuel ratio when the temperature detected or estimated by the temperature detection part reaches the predetermined temperature.
(5) The exhaust purification system of an internal combustion engine described in any one of above (1) to (4), wherein the ammonia detection device is a sensor cell of an NO_{X} sensor.
(6) The exhaust purification system of an internal combustion engine described in above (5), wherein the air-fuel ratio detection device is a pump cell of the NO_{X} sensor.

### Advantageous Effects of Invention

According to the present invention, there is provided an exhaust purification system of an internal combustion engine able to suppress deterioration of the exhaust emission while suppressing a drop in the oxygen storage ability of the catalyst.

### Brief Description of Drawings

[FIG. 1] FIG. 1 is a view schematically showing an internal combustion engine at which an exhaust purification system of an internal combustion engine according to a first embodiment of the present invention is provided.
[FIG. 2A] FIG. 2A is a view showing a relationship between an oxygen storage amount of a catalyst and an NO_{X} concentration in exhaust gas flowing out from the catalyst.
[FIG. 2B] FIG. 2B is a view showing a relationship between an oxygen storage amount of a catalyst and HC and CO concentrations in exhaust gas flowing out from the catalyst.
[FIG. 3] FIG. 3 is a view showing a relationship between a sensor applied voltage and output current at different exhaust air-fuel ratios.
[FIG. 4] FIG. 4 is a view showing a relationship between an exhaust air-fuel ratio and output current when a sensor applied voltage is made constant.
[FIG. 5] FIG. 5 is a view schematically showing an upstream side catalyst in the state where an oxygen storage amount is small.
[FIG. 6] FIG. 6 is a view schematically showing an upstream side catalyst in the state where an oxygen storage amount is substantially zero.
[FIG. 7] FIG. 7 is a time chart of concentrations of different components in outflowing exhaust gas when exhaust gas of a rich air-fuel ratio continues to flow into an upstream side catalyst storing oxygen.
[FIG. 8] FIG. 8 is a time chart of a target air-fuel ratio of inflowing exhaust gas etc., when rich control is performed.
[FIG. 9] FIG. 9 is a flow chart showing a control routine for processing for setting a target air-fuel ratio in a first embodiment of the present invention.
[FIG. 10] FIG. 10 is a time chart of a target air-fuel ratio of inflowing exhaust gas etc., when air-fuel ratio control in a second embodiment is performed.
[FIG. 11] FIG. 11 is a view schematically showing a part of an exhaust passage of an internal combustion engine at which an exhaust purification system of an internal combustion engine according to a third embodiment of the present invention is provided.
[FIG. 12] FIG. 12 is a map showing a relationship between a temperature of outflowing exhaust gas and a strong rich set air-fuel ratio.
[FIG. 13] FIG. 13 is a flow chart showing a control routine of processing for setting a strong rich set air-fuel ratio in a third embodiment of the present invention.
[FIG. 14] FIG. 14 is a flow chart showing a control routine for processing for setting a target air-fuel ratio in a fourth embodiment of the present invention.
[FIG. 15] FIG. 15 is a view schematically showing an internal combustion engine at which an exhaust purification system of an internal combustion engine according to a fifth embodiment of the present invention is provided.
[FIG. 16] FIG. 16 is a cross-sectional view of a sensor element of an NO_{X} sensor.

### Description of Embodiments

Below, referring to the figures, embodiments of the present invention will be explained in detail. Note that, in the following explanation, similar components are assigned the same reference numerals.

### First Embodiment

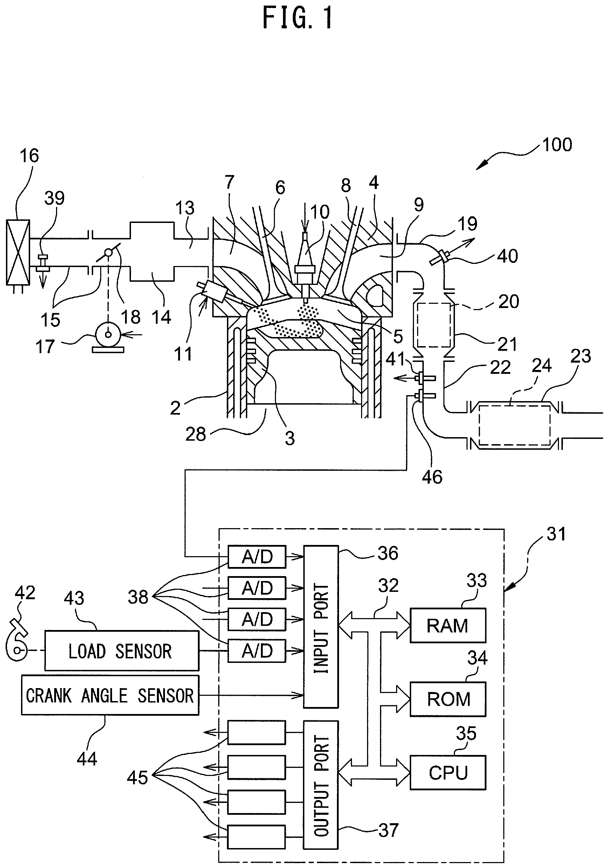

First, referring to FIG. 1 to FIG. 9, a first embodiment of the present invention will be explained.

### Explanation of Internal Combustion Engine Overall

FIG. 1 is a view schematically showing an internal combustion engine 100 provided with an exhaust purification system of an internal combustion engine according to a first embodiment of the present invention. The internal combustion engine 100 shown in FIG. 1 is a spark ignition type internal combustion engine (gasoline engine). The internal combustion engine 100 is mounted in a vehicle.

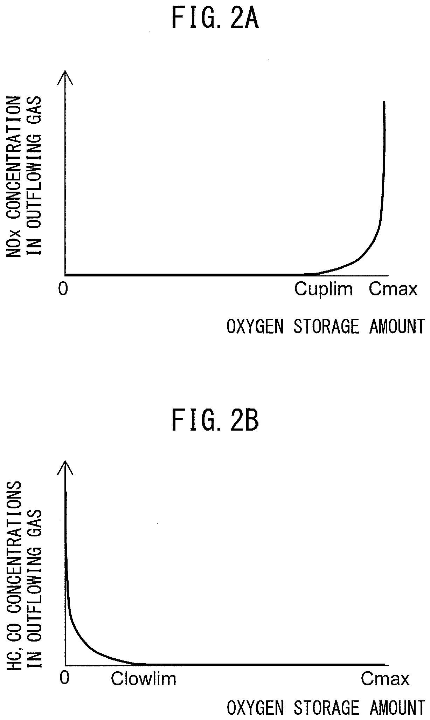

Referring to FIG. 1, 2 indicates a cylinder block, 3 a piston which reciprocates inside the cylinder block 2, 4 a cylinder head which is fastened to the cylinder block 2, 5 a combustion chamber which is formed between the piston 3 and the cylinder head 4, 6 an intake valve, 7 an intake port, 8 an exhaust valve, and 9 an exhaust port. The intake valve 6 opens and closes the intake port 7, while the exhaust valve 8 opens and closes the exhaust port 9. The cylinder block 2 defines cylinders 28.

As shown in FIG. 1, at the center part of the inside wall surface of the cylinder head 4, a spark plug 10 is arranged. A fuel injector 11 is arranged around the inside wall surface of the cylinder head 4. The spark plug 10 is configured to cause generation of a spark in accordance with an ignition signal. Further, the fuel injector 11 injects a predetermined amount of fuel into the combustion chamber 5 in accordance with an injection signal. In the present embodiment, as the fuel, gasoline with a stoichiometric air-fuel ratio of 14.6 is used.

The intake port 7 in each cylinder is connected through a corresponding intake runner 13 to a surge tank 14. The surge tank 14 is connected through an intake pipe 15 to an air cleaner 16. The intake port 7, intake runner 13, surge tank 14, intake pipe 15, etc., form an intake passage which leads air to the combustion chamber 5. Further, inside the intake pipe 15, a throttle valve 18 which is driven by a throttle valve drive actuator 17 is arranged. The throttle valve 18 can be turned by the throttle valve drive actuator 17 to thereby change the opening area of the intake passage.

On the other hand, the exhaust port 9 in each cylinder is connected to an exhaust manifold 19. The exhaust manifold 19 has a plurality of runners which are connected to the exhaust ports 9 and a header at which these runners are collected. The header of the exhaust manifold 19 is connected to an upstream side casing 21 which has an upstream side catalyst 20 built into it. The upstream side casing 21 is connected to a downstream side casing 23 which has a downstream side catalyst 24 built into it via an exhaust pipe 22. The exhaust port 9, exhaust manifold 19, upstream side casing 21, exhaust pipe 22, downstream side casing 23, etc., form an exhaust passage which discharges exhaust gas produced due to combustion of the air-fuel mixture in the combustion chamber 5.

Various control routines of the internal combustion engine are performed by an electronic control unit (ECU) 31. The ECU 31 is comprised of a digital computer which is provided with components which are connected together through a bidirectional bus 32 such as a RAM (random access memory) 33, ROM (read only memory) 34, CPU (microprocessor) 35, input port 36, and output port 37. In the intake pipe 15, an air flow meter 39 detecting the flow rate of air which flows through the intake pipe 15 is arranged. The output of the air flow meter 39 is input through a corresponding AD converter 38 to the input port 36.

Further, at the header of the exhaust manifold 19, i.e., a upstream side of the upstream side catalyst 20 in the direction of flow of exhaust, an upstream side air-fuel ratio sensor 40 is arranged which detects the air-fuel ratio of the exhaust gas which flows through the inside of the exhaust manifold 19 (that is, the exhaust gas which flows into the upstream side catalyst 20). In addition, in the exhaust pipe 22, i.e., a downstream side of the upstream side catalyst 20 in the direction of flow of exhaust, a downstream side air-fuel ratio sensor 41 is arranged which detects the air-fuel ratio of the exhaust gas flowing through the inside of the exhaust pipe 22 (that is, the exhaust gas which flows out from the upstream side catalyst 20). The outputs of the air-fuel ratio sensors 40 and 41 are input through the corresponding AD converters 38 to the input port 36.

Further, inside the exhaust pipe 22, that is, at the downstream side of the upstream side catalyst 20 in the direction of flow of exhaust, an ammonia sensor (NH₃ sensor) 46 for detecting the ammonia concentration (NH₃ concentration) in the exhaust gas flowing through the inside of the exhaust pipe 22 (that is, exhaust gas flowing out from the upstream side catalyst 20) is arranged. The ammonia sensor 46 is arranged in the exhaust passage adjacent to the downstream side air-fuel ratio sensor 41. In the present embodiment, the ammonia sensor 46 is arranged at the downstream side of the downstream side air-fuel ratio sensor 41 in the direction of flow of exhaust. Further, the downstream side air-fuel ratio sensor 41 and ammonia sensor 46 are arranged between the upstream side catalyst 20 and downstream side catalyst 24 in the direction of flow of exhaust. Note that, as long as the ammonia sensor 46 is at the downstream side of the upstream side catalyst 20 in the direction of flow of exhaust, it may be arranged at the upstream side from the downstream side air-fuel ratio sensor 41 in the direction of flow of exhaust. The output of the ammonia sensor 46 is input through a corresponding AD converter 38 to the input port 36.

Further, an accelerator pedal 42 is connected to a load sensor 43 generating an output voltage proportional to the amount of depression of the accelerator pedal 42. The output voltage of the load sensor 43 is input through a corresponding AD converter 38 to the input port 36. A crank angle sensor 44 generates an output pulse every time the crankshaft rotates, for example, by 15 degrees. This output pulse is input to the input port 36. In the CPU 35, the engine speed is calculated from the output pulse of the crank angle sensor 44. On the other hand, the output port 37 is connected through corresponding drive circuits 45 to the spark plugs 10, fuel injectors 11, and the throttle valve drive actuator 17.

Note that, the above-mentioned internal combustion engine 100 is a nonsupercharged internal combustion engine fueled by gasoline, but the configuration of the internal combustion engine 100 is not limited to the above configuration. Therefore, the cylinder array, mode of injection of fuel, configuration of the intake and exhaust systems, configuration of the valve operating mechanism, presence of any supercharger, and other specific parts of the configuration of the internal combustion engine 100 may differ from the configuration shown in FIG. 1. For example, the fuel injectors 11 may be arranged to inject fuel into the intake ports 7. Further, the internal combustion engine 100 may be a compression ignition type internal combustion engine (diesel engine).

### Explanation of Catalyst

The upstream side catalyst 20 and downstream side catalyst 24 arranged in the exhaust passage have similar configurations. The catalysts 20 and 24 have oxygen storage abilities. The catalysts 20 and 24 are for example three-way catalysts. Specifically, the catalysts 20 and 24 are comprised of carriers comprised of ceramic on which a precious metal having a catalytic action (for example, platinum (Pt)) and a substance having an oxygen storage ability (for example, ceria (CeO₂)) are carried. The catalysts 20 and 24 can simultaneously remove unburned gas (HC, CO, etc.) and nitrogen oxides (NO_{X}) if reaching a predetermined activation temperature.

The catalysts 20 and 24 store the oxygen in the exhaust gas when the air-fuel ratio of the exhaust gas flowing into the catalysts 20 and 24 is an air-fuel ratio leaner than the stoichiometric air-fuel ratio (below, referred to as a "lean air-fuel ratio"). On the other hand, the catalysts 20 and 24 release the oxygen stored in the catalysts 20 and 24 when the air-fuel ratio of the inflowing exhaust gas is an air-fuel ratio richer than the stoichiometric air-fuel ratio (below, referred to as a "rich air-fuel ratio").

The catalysts 20 and 24 have catalytic actions and oxygen storage abilities, so have the actions of removing the NO_{X} and unburned gas according to the oxygen storage amounts. If the air-fuel ratio of the exhaust gas flowing into the catalysts 20 and 24 is a lean air-fuel ratio, as shown in FIG. 2A, when the oxygen storage amounts are small, the oxygen in the exhaust gas is stored in the catalysts 20 and 24 and the NO_{X} in the exhaust gas is removed by reduction. Further, if the oxygen storage amounts become large, the concentrations of oxygen and NO_{X} in the exhaust gas flowing out from the catalysts 20 and 24 rapidly rise at a certain storage amount near the maximum storable oxygen amounts Cmax (Cuplim in the figure).

On the other hand, if the air-fuel ratio of the exhaust gas flowing into the catalysts 20 and 24 is a rich air-fuel ratio, as shown in FIG. 2B, when the oxygen storage amounts are large, the oxygen stored in the catalysts 20 and 24 is released and the unburned gas in the exhaust gas is removed by oxidation. Further, if the oxygen storage amounts become small, the concentration of unburned gas in the exhaust gas flowing out from the catalysts 20 and 24 rapidly rises at a certain storage amount near zero (Clowlim in figure). Therefore, the characteristics of removal of the NO_{X} and unburned gas in the exhaust gas change in accordance with the air-fuel ratio of the exhaust gas flowing into the catalysts 20 and 24 and oxygen storage amounts of the catalysts 20 and 24.

Note that, as long as the catalysts 20 and 24 have catalytic actions and oxygen storage abilities, they may be catalysts different from three-way catalysts. Further, the downstream side catalyst 24 may be omitted.

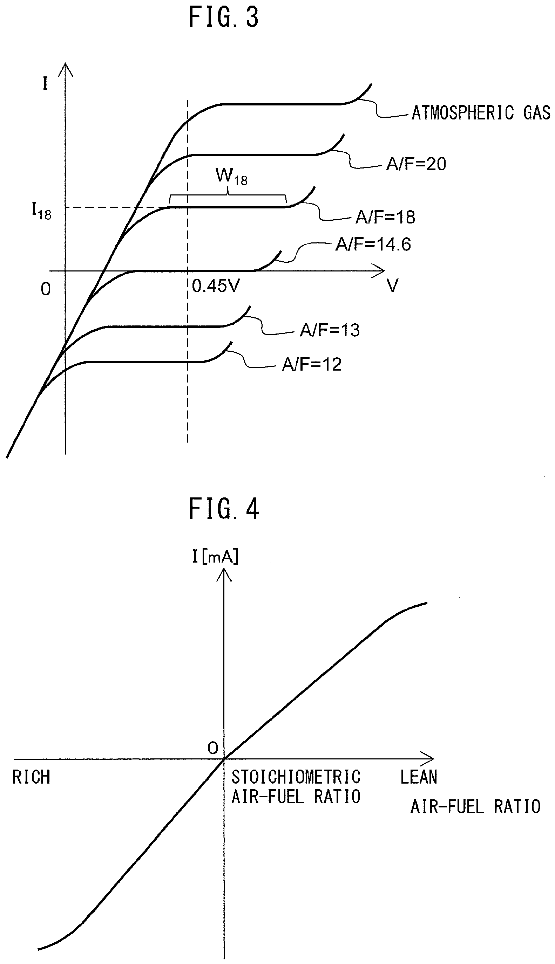

Output Characteristics of Air-Fuel Ratio Sensor Next, referring to FIG. 3 and FIG. 4, the output characteristics of the air-fuel ratio sensors 40 and 41 will be explained. FIG. 3 is a view showing the voltage-current (V-I) characteristics of the air-fuel ratio sensors 40 and 41. FIG. 4 is a graph showing the relationship between the air-fuel ratio of exhaust gas supplied to the air-fuel ratio sensors 40 and 41 (below, referred to as the "exhaust air-fuel ratio") and the output currents I of the air-fuel ratio sensors 40 and 41 when making the applied voltage constant. Note that, in the present embodiment, the air-fuel ratio sensors 40 and 41 have the same configurations.

As will be understood from FIG. 3, the output currents I of the air-fuel ratio sensors 40 and 41 become larger the higher the exhaust air-fuel ratio (the leaner it is). Further, at the V-I lines at the different exhaust air-fuel ratios, there are regions substantially parallel to the V-axis, that is, regions where the output currents do not change much at all even if the applied voltages change. These voltage regions are called "limit current regions". The currents at this time are called the "limit currents". In FIG. 3, the limit current region and limit current when the exhaust air-fuel ratio is 18 are respectively shown by W₁₈ and I₁₈. Therefore, the air-fuel ratio sensors 40 and 41 are limit current type air-fuel ratio sensors.

FIG. 4 is a view showing the relationship between the exhaust air-fuel ratio and the output current I when making the applied voltage constant at 0.45V or so. As will be understood from FIG. 4, at the air-fuel ratio sensors 40 and 41, the higher the exhaust air-fuel ratios (that is, the leaner they are), the larger the output currents I of the air-fuel ratio sensors 40 and 41. That is, the output currents I change linearly (proportionally) with respect to the exhaust air-fuel ratio. In addition, the air-fuel ratio sensors 40 and 41 are configured so that the output currents I become zero when the exhaust air-fuel ratio is the stoichiometric air-fuel ratio.

Accordingly, it is possible to detect the air-fuel ratio of the exhaust gas supplied to the air-fuel ratio sensors 40 and 41 by detecting the outputs of the air-fuel ratio sensors 40 and 41 in the state where a predetermined voltage is applied to the air-fuel ratio sensors 40 and 41. In the present embodiment, the upstream side air-fuel ratio sensor 40 can be used to detect the air-fuel ratio of the exhaust gas flowing into the upstream side catalyst 20 (below, referred to as the "inflowing exhaust gas"), while the downstream side air-fuel ratio sensor 41 can be used to detect the air-fuel ratio of the exhaust gas flowing out from the upstream side catalyst 20 (below, referred to as the "outflowing exhaust gas").

### Exhaust Purification Mechanism of Catalyst

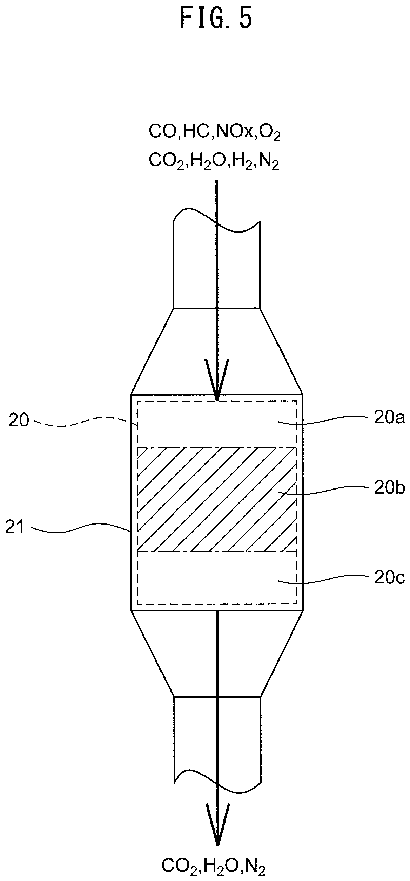

Below, the mechanism by which exhaust gas is purified at the upstream side catalyst 20 when exhaust gas of a rich air-fuel ratio flows into the upstream side catalyst 20 will be explained in detail. FIG. 5 is a view schematically showing an upstream side catalyst 20 in the state where the oxygen storage amount is small. FIG. 5 shows the direction of flow of exhaust by arrows. In this example, exhaust gas of a rich air-fuel ratio continues to flow into the upstream side catalyst 20. If exhaust gas of a rich air-fuel ratio flows into the upstream side catalyst 20, in order to remove the unburned gas, the oxygen stored in the upstream side catalyst 20 is released. The oxygen stored in the upstream side catalyst 20 is successively released from the upstream side of the upstream side catalyst 20 in the direction of flow of exhaust. For this reason, in the example of FIG. 5, an oxygen storage region 20c where oxygen is stored remains only at the downstream side of the upstream side catalyst 20.

Exhaust gas of a rich air-fuel ratio mainly contains carbon monoxide (CO), hydrocarbon (HC), nitrogen oxides (NO_{X}), oxygen (O₂), carbon dioxide (CO₂), water (H₂O), hydrogen (H₂), and nitrogen (N₂). The larger the rich degree of the air-fuel ratio, the higher the concentrations of hydrocarbons and carbon monoxide in the exhaust gas and the lower the concentration of NO_{X} in the exhaust gas. If exhaust gas flows into the upstream side catalyst 20 in the state shown in FIG. 5, first, the unburned oxygen not burned in the combustion chambers 5 is consumed by the following oxygen consumption reaction (1) at the upstream side region 20a of the upstream side catalyst 20:

O₂+HC+CO+H₂→H₂O+CO₂... (1)

The region between the upstream side region 20a and the oxygen storage region 20c is the rich region 20b where almost all of the stored oxygen is released. The rich region 20b is shown by hatching in FIG. 5. In the rich region 20b, the following water gas shift reaction (2) and steam reforming reaction (3) occur.

CO+H₂O→H₂+CO₂... (2)

HC+H₂O→CO+H₂... (3)

Further, in the rich region 20b, ammonia (NH₃) is produced by the following NO removal reaction (4):

NO+CO+H₂→N₂+H₂O+CO₂+NH₃... (4)

Further, oxygen slightly remains in the rich region 20b as well. Further, hydrogen has a higher reactivity with oxygen than ammonia. For this reason, in the rich region 20b, the following hydrogen oxidation reaction (5) occurs whereby part of the hydrogen generated by the above water gas shift reaction (2) and steam reforming reaction (3) is oxidized.

H₂+O→H₂O... (5)

On the other hand, the oxygen storage region 20c stores a sufficient amount of oxygen. For this reason, the hydrogen which was not oxidized in the rich region 20b changes to water by the above hydrogen oxidation reaction (5) in the oxygen storage region 20c. Further, the ammonia produced by the above NO removal reaction (4) in the rich region 20b is purified to water and nitrogen by the following ammonia oxidation reaction (6) in the oxygen storage region 20c:

NH₃+O→H₂O+N₂... (6)

Due to the above chemical reactions, the harmful substances in the exhaust gas are removed at the upstream side catalyst 20. For this reason, in the state where the upstream side catalyst 20 is storing oxygen, the outflowing exhaust gas mainly contains carbon dioxide, water, and nitrogen.

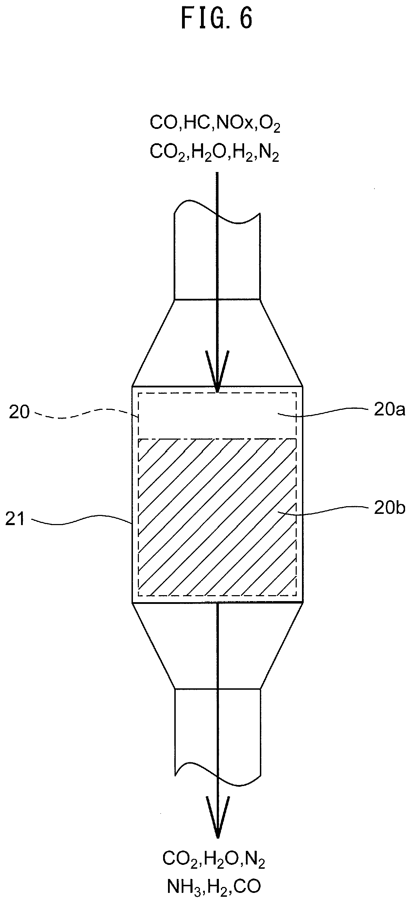

On the other hand, FIG. 6 is a view schematically showing the upstream side catalyst 20 in a state where the oxygen storage amount is substantially zero. In the state of FIG. 5, if exhaust gas of a rich air-fuel ratio further flows into the upstream side catalyst 20, the oxygen of the oxygen storage region 20c is released and, as shown in FIG. 6, the oxygen storage region 20c changes to the rich region 20b. The rich region 20b is shown by hatching in FIG. 6.

In the example of FIG. 6 as well, exhaust gas of a rich air-fuel ratio flows into the upstream side catalyst 20. If exhaust gas of a rich air-fuel ratio flows into the upstream side catalyst 20, in the same way as the example of FIG. 5, first, at the upstream side region 20a, the unburned oxygen which was not burned in the combustion chambers 5 is consumed by the above oxygen consumption reaction (1). Next, at the rich region 20b, the above-mentioned water gas shift reaction (2), steam reforming reaction (3), NO removal reaction (4), and hydrogen oxidation reaction (5) occur.

The upstream side catalyst 20 shown in FIG. 6 does not have an oxygen storage region 20c. For this reason, the ammonia produced by the above NO removal reaction (4) in the rich region 20b flows out from the upstream side catalyst 20 without being oxidized. On the other hand, a part of the hydrogen produced by the above water gas shift reaction (2) and steam reforming reaction (3) in the rich region 20b is oxidized by the above hydrogen oxidation reaction (5) until the oxygen in the rich region 20b is depleted. For this reason, the speed of rise of the hydrogen concentration in the outflowing exhaust gas becomes slower than the speed of rise of the concentration of ammonia in the outflowing exhaust gas.

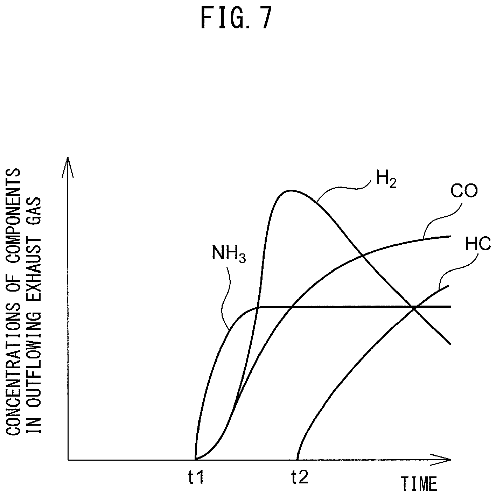

FIG. 7 is a time chart of the concentrations of the different components in outflowing exhaust gas when exhaust gas of a rich air-fuel ratio continues to flow into the upstream side catalyst 20 in which oxygen is stored. In this example, at the time t1, due to the exhaust gas of a rich air-fuel ratio, there is no longer an oxygen storage region 20c of the upstream side catalyst 20, and the upstream side catalyst 20 becomes the state of FIG. 6. In the state of FIG. 6, ammonia is not oxidized, so after the time t1, the concentration of ammonia in the exhaust gas rapidly rises. On the other hand, as explained above, hydrogen has a higher reactivity with oxygen than ammonia. For this reason, hydrogen is oxidized until the oxygen in the rich region 20b of the upstream side catalyst 20 is depleted. As a result, after the time t1, the concentration of hydrogen in the exhaust gas rises more slowly than the ammonia concentration.

Further, after the time t1, rich poisoning of the upstream side catalyst 20 occurs and the precious metal of the upstream side catalyst 20 is covered by the rich components (HC, CO, etc.) in the exhaust gas, so the reactivity of the water gas shift reaction falls. As a result, after the time t1, carbon monoxide flows out from the upstream side catalyst 20 and the concentration of carbon monoxide in the exhaust gas gradually rises. At this time, the concentration of carbon monoxide in the exhaust gas rises more slowly than the ammonia concentration. After that, if rich poisoning of the upstream side catalyst 20 progresses and the reactivity of the water gas shift reaction further falls, the concentration of hydrogen in the exhaust gas gradually falls.

Further, if rich poisoning of the upstream side catalyst 20 progresses, the reactivity of the steam reforming reaction also falls. For this reason, after the time t2 after the time t1, hydrocarbons flow out from the upstream side catalyst 20 and the concentration of hydrocarbons in the exhaust gas gradually rises.

The ammonia sensor 46 decomposes ammonia in the outflowing exhaust gas to detect the concentration of ammonia in the outflowing exhaust gas. For this reason, the higher the concentration of ammonia in the outflowing exhaust gas, the greater the output value of the ammonia sensor 46. Further, if the outflow amount of hydrogen, carbon monoxide, and hydrocarbons in addition to ammonia becomes greater, the concentration of oxygen in the outflowing exhaust gas further falls and the air-fuel ratio detected by the downstream side air-fuel ratio sensor 41 changes to the rich side (becomes lower). As explained above, if the oxygen storage amount of the upstream side catalyst 20 approaches zero, the concentration of ammonia in the outflowing exhaust gas rises faster than the concentrations of hydrogen, carbon monoxide, and hydrocarbons. For this reason, change of the output of the ammonia sensor 46 is detected before change of the air-fuel ratio detected by the downstream side air-fuel ratio sensor 41.

### Exhaust Purification System of Internal Combustion Engine

Below, an exhaust purification system of the internal combustion engine 100 according to the first embodiment of the present invention (below, simply referred to as the "exhaust purification system") will be explained. The exhaust purification system is provided with an upstream side catalyst 20, a downstream side catalyst 24, an ammonia detection device and air-fuel ratio detection device arranged in the exhaust passage at the downstream side of the upstream side catalyst 20 in the direction of flow of exhaust, and an air-fuel ratio control part controlling the air-fuel ratio of the inflowing exhaust gas to the target air-fuel ratio. In the present embodiment, the harmful substances in the exhaust gas are basically removed at the upstream side catalyst 20. The downstream side catalyst 24 is used for auxiliary purposes. Therefore, the exhaust purification system need not be provided with the downstream side catalyst 24.

The ammonia detection device detects the concentration of ammonia in the outflowing exhaust gas while the air-fuel ratio detection device detects the air-fuel ratio of the outflowing exhaust gas. In the present embodiment, the ammonia sensor 46 functions as an ammonia detection device while the downstream side air-fuel ratio sensor 41 functions as an air-fuel ratio detection device. Further, the ECU 31 functions as the air-fuel ratio control part.

When controlling the air-fuel ratio of the inflowing exhaust gas to the target air-fuel ratio, the air-fuel ratio control part sets the target air-fuel ratio of the inflowing exhaust gas and controls the amount of fuel supplied to the combustion chamber 5 so that the air-fuel ratio of the inflowing exhaust gas matches the target air-fuel ratio. The air-fuel ratio control part can control the amount of fuel supplied to the combustion chambers 5 by controlling the fuel injectors 11 etc.

For example, the air-fuel ratio control part feedback controls the amount of fuel supplied to the combustion chambers 5 so that the air-fuel ratio detected by the upstream side air-fuel ratio sensor 40 matches the target air-fuel ratio. In this case, the upstream side air-fuel ratio sensor 40 functions as a component of the exhaust purification system. Note that, the air-fuel ratio control part 31 may control the amount of fuel supplied to the combustion chambers 5 without using the upstream side air-fuel ratio sensor 40. In this case, the air-fuel ratio control part 31 supplies the amount of fuel calculated from the amount of intake air detected by the air flow meter 39 etc., and the target air-fuel ratio to the combustion chambers 5 so that the ratio of the fuel and air supplied to the combustion chambers 5 matches the target air-fuel ratio. Therefore, the upstream side air-fuel ratio sensor 40 may be omitted from the internal combustion engine 100.

In order to maintain the exhaust emission of the internal combustion engine 100 in a good state, it is necessary to maintain the oxygen storage ability of the upstream side catalyst 20 to suppress the drop in the exhaust purification performance of the upstream side catalyst 20. In order to maintain the oxygen storage ability of the upstream side catalyst 20, the oxygen storage amount of the upstream side catalyst 20 is preferably periodically made zero so that the state where oxygen is stored in the upstream side catalyst 20 is not maintained for a long period of time. For this reason, the air-fuel ratio control part performs rich control making the target air-fuel ratio richer than the stoichiometric air-fuel ratio so that the oxygen storage amount of the upstream side catalyst 20 decreases.

Further, in order to completely release oxygen stored in the upstream side catalyst 20, it is necessary to make exhaust gas of an air-fuel ratio with a high rich degree flow into the upstream side catalyst 20. On the other hand, the higher the rich degree of the air-fuel ratio of the exhaust gas, the greater the amount of unburned gas (HC, CO, etc.) flowing out from the upstream side catalyst 20 when the oxygen storage amount of the upstream side catalyst 20 approaches zero and the more the exhaust emission deteriorates.

As explained above, the ammonia concentration in the outflowing gas rises faster than the unburned gas concentration in the outflowing gas. For this reason, when a change of the output of the ammonia sensor 46 is detected, the amount of unburned gas flowing out from the upstream side catalyst 20 is still small. Further, when a change of the air-fuel ratio of the outflowing exhaust gas is detected by the downstream side air-fuel ratio sensor 41, the oxygen of the upstream side catalyst 20 is depleted and a large amount of unburned gas starts to flow out from the upstream side catalyst 20. For this reason, the air-fuel ratio control part reduces the rich degree of the target air-fuel ratio when the output value of the ammonia sensor 46 rises to a reference value in the rich control, and ends the rich control when the air-fuel ratio detected by the downstream side air-fuel ratio sensor 41 falls to a rich judged air-fuel ratio richer than the stoichiometric air-fuel ratio.

By doing this, in the period from when the rich control is started to when the output value of the ammonia sensor 46 rises to the reference value, exhaust gas of an air-fuel ratio with a large rich degree can be made to flow into the upstream side catalyst 20. For this reason, it is possible to effectively release oxygen from the upstream side catalyst 20 by the rich control and in turn possible to suppress a drop in the oxygen storage ability of the upstream side catalyst 20. Further, before the amount of outflow of unburned gas becomes greater, the rich degree of the target air-fuel ratio is made smaller. As a result, the amount of unburned gas flowing into the upstream side catalyst 20 becomes smaller, and the amount of unburned gas flowing out from the upstream side catalyst 20 when the oxygen storage amount of the upstream side catalyst 20 becomes substantially zero can be made smaller. Therefore, in the present embodiment, it is possible to suppress deterioration of the exhaust emission while suppressing the drop in the oxygen storage ability of the catalyst.

The air-fuel ratio control part, for example as shown below, reduces the rich degree of the target air-fuel ratio of the inflowing exhaust gas during the rich control. The air-fuel ratio control part sets the target air-fuel ratio of the inflowing exhaust gas to a strong rich set air-fuel ratio from when the rich control is started to when the output value of the ammonia sensor 46 rises to the reference value. Further, the air-fuel ratio control part sets the target air-fuel ratio of the inflowing exhaust gas to a weak rich set air-fuel ratio from when the output value of the ammonia sensor 46 rises to the reference value to when the air-fuel ratio detected by the downstream side air-fuel ratio sensor 41 falls to the rich judged air-fuel ratio richer than the stoichiometric air-fuel ratio. That is, the air-fuel ratio control part sets the target air-fuel ratio of the inflowing exhaust gas to the strong rich set air-fuel ratio at the time of start of the rich control, and switches the target air-fuel ratio of the inflowing exhaust gas from the strong rich set air-fuel ratio to the weak rich set air-fuel ratio when the output value of the ammonia sensor 46 rises to the reference value during the rich control.

The strong rich set air-fuel ratio and the weak rich set air-fuel ratio are predetermined and are set to values richer than the stoichiometric air-fuel ratio (in the present embodiment, 14.6). Further, the weak rich set air-fuel ratio is set to a value with a smaller rich degree than the strong rich set air-fuel ratio, that is, a value leaner than the strong rich set air-fuel ratio. For example, the strong rich set air-fuel ratio is set within the range of 12.5 to 14 while the weak rich set air-fuel ratio is set within the range of 14 to 14.4. Note that, the "rich degree" means the difference between the target air-fuel ratio set to a value richer than the stoichiometric air-fuel ratio and the stoichiometric air-fuel ratio.

The rich judged air-fuel ratio is predetermined and is set to a value richer than the stoichiometric air-fuel ratio. The air-fuel ratio detected by the downstream side air-fuel ratio sensor 41 is sometimes slightly off from the stoichiometric air-fuel ratio even if the upstream side catalyst 20 is storing oxygen. For this reason, the rich judged air-fuel ratio is set to a value which is close to the stoichiometric air-fuel ratio, but is not detected by the downstream side air-fuel ratio sensor 41 when oxygen remains in the upstream side catalyst 20. The rich judged air-fuel ratio is for example 14.55. Note that, the strong rich set air-fuel ratio and the weak rich set air-fuel ratio are set to values richer than the rich judged air-fuel ratio.

The reference value is predetermined and is a value corresponding to a predetermined concentration of ammonia in exhaust gas (for example 10 ppm). The reference value is a value detected by the ammonia sensor 46 when ammonia starts to flow out from the upstream side catalyst 20. Further, the rich judged air-fuel ratio and reference value are set so that if the output characteristics of the downstream side air-fuel ratio sensor 41 and the ammonia sensor 46 are normal, the output value of the ammonia sensor 46 rises to the reference value after the start of the rich control and before the air-fuel ratio detected by the downstream side air-fuel ratio sensor 41 falls to the rich judged air-fuel ratio.

Note that, the air-fuel ratio control part does not necessarily have to maintain the target air-fuel ratio of the inflowing exhaust gas from when the rich control is started to when the output value of the ammonia sensor 46 rises to the reference value. For example, the air-fuel ratio control part reduces the rich degree of the target air-fuel ratio of the inflowing exhaust gas in stages from when the rich control is started to when the output value of the ammonia sensor 46 rises to the reference value.

### Explanation of Air-Fuel Ratio Control Using Time Chart

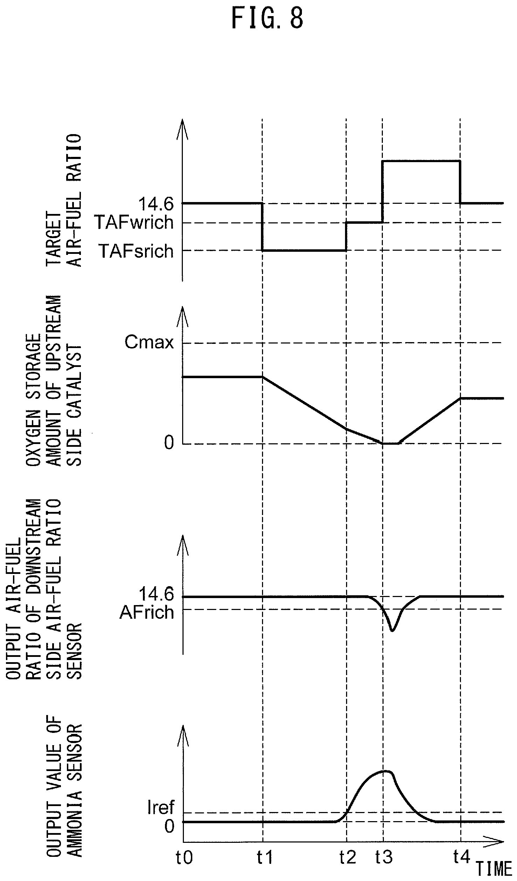

Below, referring to the time chart of FIG. 8, air-fuel ratio control during the rich control in the present embodiment will be specifically explained. FIG. 8 is a time chart of a target air-fuel ratio of the inflowing exhaust gas, an oxygen storage amount of the upstream side catalyst 20, an air-fuel ratio detected by the downstream side air-fuel ratio sensor 41 (output air-fuel ratio of downstream side air-fuel ratio sensor 41), and an output value of the ammonia sensor 46 when rich control is performed.

In the illustrated example, at the time t0, the target air-fuel ratio of the inflowing exhaust gas is set to the stoichiometric air-fuel ratio (14.6). Further, at the time t0, the upstream side catalyst 20 stores a sufficient amount of oxygen less than the maximum storable oxygen amount Cmax. For this reason, the output air-fuel ratio of the downstream side air-fuel ratio sensor 41 is the stoichiometric air-fuel ratio, while the output value of the ammonia sensor 46 is zero.

After that, at the time t1, the rich control is started and the target air-fuel ratio of the inflowing exhaust gas is switched from the stoichiometric air-fuel ratio to the strong rich set air-fuel ratio TAFsrich. As a result, after the time t1, the oxygen storage amount of the upstream side catalyst 20 gradually falls.

When the oxygen storage amount of the upstream side catalyst 20 approaches zero, the oxidation reaction of ammonia at the upstream side catalyst 20 is suppressed and the ammonia starts to flow out from the upstream side catalyst 20. As a result, the output value of the ammonia sensor 46 rises from zero and reaches the reference value Iref at the time t2. For this reason, at the time t2, the target air-fuel ratio is switched from the strong rich set air-fuel ratio TAFsrich to the weak rich set air-fuel ratio TAFwrich.

After time t2, when the oxygen storage amount of the upstream side catalyst 20 further decreases, the amount of unburned gas flowing out from the upstream side catalyst 20 rapidly increases. As a result, the output air-fuel ratio of the downstream side air-fuel ratio sensor 41 falls from the stoichiometric air-fuel ratio and reaches the rich judged air-fuel ratio AFrich at the time t3. For this reason, the rich control is ended at the time t3.

In this example, in order to increase the oxygen storage amount of the upstream side catalyst 20 to keep unburned gas from flowing out from the upstream side catalyst 20, the target air-fuel ratio is set to the lean air-fuel ratio at the time t3. That is, the target air-fuel ratio is switched from the weak rich set air-fuel ratio TAFwrich to the lean air-fuel ratio. After the target air-fuel ratio is maintained at the lean air-fuel ratio for a predetermined time, at the time t4, the target air-fuel ratio is again set to the stoichiometric air-fuel ratio.

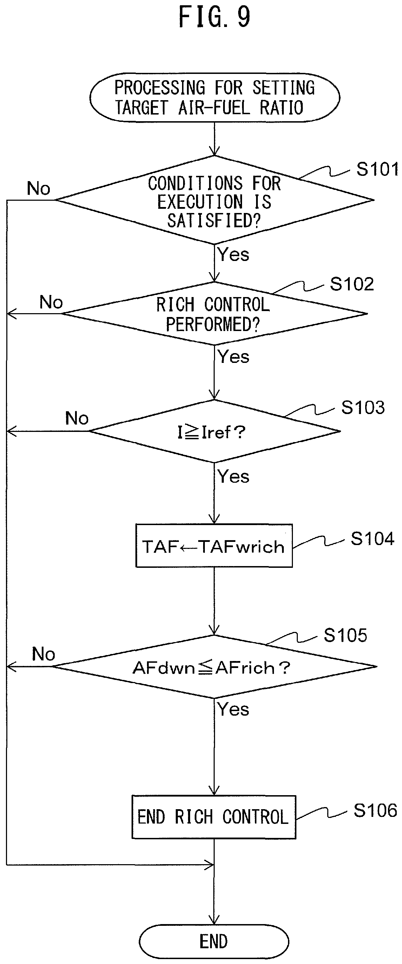

Processing for Setting Target Air-Fuel Ratio Below, referring to the flow chart of FIG. 9, air-fuel ratio control during the rich control in the present embodiment will be explained. FIG. 9 is a flow chart showing the control routine for processing for setting the target air-fuel ratio in the first embodiment of the present invention. The present control routine is repeatedly performed by the ECU 31 at predetermined time intervals after the startup of the internal combustion engine 100.

First, at step S101, the air-fuel ratio control part judges whether the conditions for execution is satisfied. For example, the air-fuel ratio control part judges that the conditions for execution is satisfied if the downstream side air-fuel ratio sensor 41 and ammonia sensor 46 are activated, and judges that the conditions for execution is not satisfied if at least one of the downstream side air-fuel ratio sensor 41 and ammonia sensor 46 is not activated. The air-fuel ratio control part judges that the downstream side air-fuel ratio sensor 41 and ammonia sensor 46 are activated if the temperatures of the sensor elements of the downstream side air-fuel ratio sensor 41 and ammonia sensor 46 are a predetermined temperature or more. The temperatures of the sensor elements are calculated based on the impedances of the sensor elements etc.

If it is judged at step S101 that the conditions for execution is not satisfied, the present control routine ends. On the other hand, if it is judged at step S101 that the conditions for execution is satisfied, the present control routine proceeds to step S102.

At step S102, the air-fuel ratio control part judges whether the rich control is being performed. For example, the rich control is performed at predetermined intervals to periodically make the oxygen storage amount of the upstream side catalyst 20 zero. Further, if fuel cut control where the supply of fuel to the combustion chambers 5 of the internal combustion engine 100 is stopped is performed, a large amount of oxygen flows into the upstream side catalyst 20 and the oxygen storage amount of the upstream side catalyst 20 reaches the maximum storable oxygen amount. For this reason, in order to reduce the oxygen storage amount of the upstream side catalyst 20, the rich control is started when the fuel cut control is ended as well. The air-fuel ratio control part sets the target air-fuel ratio of the inflowing exhaust gas TAF to the strong rich set air-fuel ratio TAFsrich when starting the rich control.

If at step S102 it is judged that the rich control is not being performed, the present control routine ends. On the other hand, if at step S102 it is judged that the rich control is being performed, the present control routine proceeds to step S103.

At step S103, the air-fuel ratio control part judges whether the output value I of the ammonia sensor 46 is the reference value Iref or more. If it is judged that the output value I of the ammonia sensor 46 is less than the reference value Iref, the present control routine ends. In this case, the target air-fuel ratio TAF is maintained at the strong rich set air-fuel ratio TAFsrich. On the other hand, if it is judged that the output value I of the ammonia sensor 46 is the reference value Iref or more, the present control routine proceeds to step S104.

At step S104, the air-fuel ratio control part sets the target air-fuel ratio TAF to the weak rich set air-fuel ratio TAFwrich leaner than the strong rich set air-fuel ratio TAFsrich. Therefore, the air-fuel ratio control part switches the target air-fuel ratio TAF from the strong rich set air-fuel ratio TAFsrich to the weak rich set air-fuel ratio TAFwrich. That is, the air-fuel ratio control part reduces the rich degree of the target air-fuel ratio TAF.

Next, at step S105, the air-fuel ratio control part judges whether the air-fuel ratio AFdwn detected by the downstream side air-fuel ratio sensor 41 is the rich judged air-fuel ratio AFrich or less. If it is judged that the air-fuel ratio AFdwn is higher (leaner) than the rich judged air-fuel ratio AFrich, the present control routine ends. In this case, the target air-fuel ratio TAF is maintained at the weak rich set air-fuel ratio TAFwrich. On the other hand, if it is judged that the air-fuel ratio AFdwn is the rich judged air-fuel ratio AFrich or less, the present control routine proceeds to step S106.

At step S106, the air-fuel ratio control part ends the rich control. The air-fuel ratio control part sets the target air-fuel ratio TAF to the lean air-fuel ratio when ending the rich control. Further, the air-fuel ratio control part maintains the target air-fuel ratio TAF at the lean air-fuel ratio for a predetermined time, then sets the target air-fuel ratio TAF in accordance with the operating state of the internal combustion engine 100. After step S106, the present control routine ends.

### Second Embodiment

An exhaust purification system according to a second embodiment is basically similar in configuration and control to the exhaust purification system according to the first embodiment except for the points explained below. For this reason, below, the second embodiment of the present invention will be explained focusing on parts different from the first embodiment.

In the second embodiment, the air-fuel ratio control part alternately performs lean control making the target air-fuel ratio leaner than the stoichiometric air-fuel ratio and rich control making the target air-fuel ratio richer than the stoichiometric air-fuel ratio. The air-fuel ratio control part sets the target air-fuel ratio of the inflowing exhaust gas to the lean set air-fuel ratio in the lean control. The lean set air-fuel ratio is predetermined and is set, for example, within the range of 14.7 to 15.5. Further, the air-fuel ratio control part performs the rich control in the same way as the first embodiment.

The air-fuel ratio control part switches the target air-fuel ratio from the weak rich set air-fuel ratio to the lean set air-fuel ratio when the air-fuel ratio detected by the downstream side air-fuel ratio sensor 41 falls to the rich judged air-fuel ratio in the rich control, and switches the target air-fuel ratio from the lean set air-fuel ratio to the strong rich set air-fuel ratio when the air-fuel ratio detected by the downstream side air-fuel ratio sensor 41 rises to the lean judged air-fuel ratio in the lean control. Further, in the same way as the first embodiment, the air-fuel ratio control part switches the target air-fuel ratio from the strong rich set air-fuel ratio to the weak rich set air-fuel ratio when the output value of the ammonia sensor 46 rises to the reference value in the rich control.

The lean judged air-fuel ratio is predetermined and is set to a value leaner than the stoichiometric air-fuel ratio. The air-fuel ratio detected by the downstream side air-fuel ratio sensor 41 is sometimes slightly off from the stoichiometric air-fuel ratio even if the amount of oxygen of the upstream side catalyst 20 is less than the maximum storable oxygen amount. For this reason, the lean judged air-fuel ratio is set to a value which is close to the stoichiometric air-fuel ratio, but is not detected by the downstream side air-fuel ratio sensor 41 when the amount of oxygen of the upstream side catalyst 20 is less than the maximum storable oxygen amount. The lean judged air-fuel ratio is for example 14.65. Note that, the lean set air-fuel ratio is set to a value leaner than the lean judged air-fuel ratio.

### Explanation of Air-Fuel Ratio Control Using Time Chart

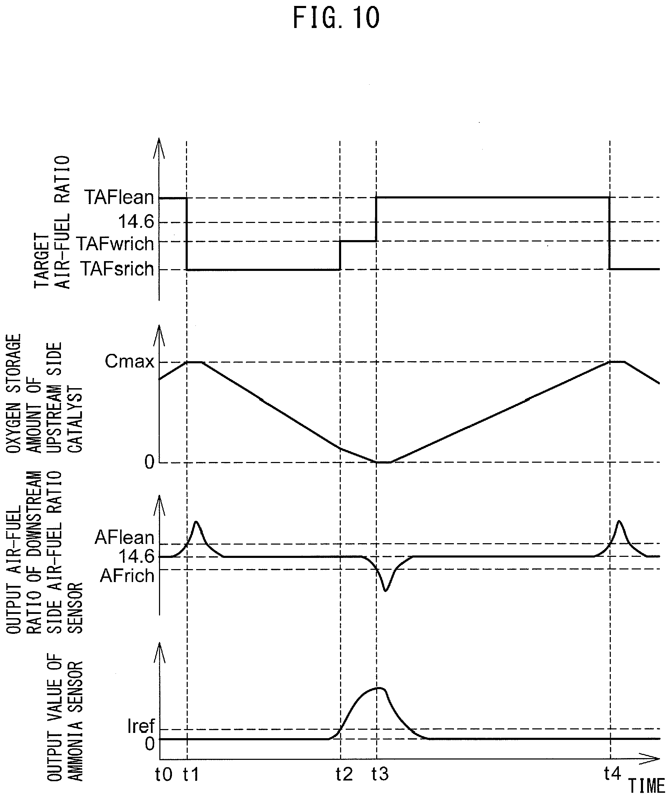

Below, referring to the time chart of FIG. 10, the air-fuel ratio control in the second embodiment will be specifically explained. FIG. 10 is a time chart of a target air-fuel ratio of the inflowing exhaust gas, an oxygen storage amount of the upstream side catalyst 20, an air-fuel ratio detected by the downstream side air-fuel ratio sensor 41 (output air-fuel ratio of downstream side air-fuel ratio sensor 41), and an output value of the ammonia sensor 46 when the air-fuel ratio control in the second embodiment is performed.

In the illustrated example, at the time t0, the target air-fuel ratio of the inflowing exhaust gas is set to the lean set air-fuel ratio TAFlean. That is, at the time t0, the lean control is performed. For this reason, at the time t0, the oxygen storage amount of the upstream side catalyst 20 increases.

After the time t0, the oxygen storage amount of the upstream side catalyst 20 approaches the maximum storable oxygen amount Cmax and oxygen and NO_{X} start to flow out from the upstream side catalyst 20. As a result, at the time t1, the output air-fuel ratio of the downstream side air-fuel ratio sensor 41 rises to the lean judged air-fuel ratio AFlean. At this time, the oxygen storage amount of the upstream side catalyst 20 is the maximum storable oxygen amount Cmax.

At the time t1, the target air-fuel ratio is switched from the lean set air-fuel ratio TAFlean to the strong rich set air-fuel ratio TAFsrich and the rich control is started. For this reason, after the time t1, the oxygen storage amount of the upstream side catalyst 20 gradually decreases and the output air-fuel ratio of the downstream side air-fuel ratio sensor 41 falls to the stoichiometric air-fuel ratio.

When the oxygen storage amount of the upstream side catalyst 20 approaches zero, the oxidation reaction of ammonia at the upstream side catalyst 20 is suppressed and ammonia starts to flow out from the upstream side catalyst 20. As a result, the output value of the ammonia sensor 46 rises from zero and reaches the reference value Iref at the time t2. For this reason, at the time t2, the target air-fuel ratio is switched from the strong rich set air-fuel ratio TAFsrich to the weak rich set air-fuel ratio TAFwrich.

When, after the time t2, the oxygen storage amount of the upstream side catalyst 20 further decreases, the amount of unburned gas flowing out from the upstream side catalyst 20 rapidly increases. As a result, the output air-fuel ratio of the downstream side air-fuel ratio sensor 41 falls from the stoichiometric air-fuel ratio and reaches the rich judged air-fuel ratio AFrich at the time t3. At this time, the oxygen storage amount of the upstream side catalyst 20 is zero.

At the time t3, the target air-fuel ratio is switched from the weak rich set air-fuel ratio TAFwrich to the lean set air-fuel ratio TAlean and the lean control is started. For this reason, after the time t3, the oxygen storage amount of the upstream side catalyst 20 gradually increases and the output air-fuel ratio of the downstream side air-fuel ratio sensor 41 rises up to the stoichiometric air-fuel ratio.

When the oxygen storage amount of the upstream side catalyst 20 approaches the maximum storable oxygen amount Cmax, the oxygen and NO_{X} start to flow out from the upstream side catalyst 20. As a result, at the time t4, the output air-fuel ratio of the downstream side air-fuel ratio sensor 41 rises up to the lean judged air-fuel ratio AFlean. For this reason, at the time t4, the target air-fuel ratio is switched from the lean set air-fuel ratio TAFlean to the strong rich set air-fuel ratio TAFsrich and the rich control is again started. After that, control from the above-mentioned time t1 to time t4 is repeated.

If the oxygen storage amount of the upstream side catalyst 20 is maintained constant, the oxygen storage ability of the upstream side catalyst 20 falls. In the second embodiment, as shown in FIG. 10, by repeating the lean control and the rich control, the oxygen storage amount of the upstream side catalyst 20 constantly fluctuates. Therefore, it is possible to further suppress a drop in the oxygen storage ability of the upstream side catalyst 20.

Further, in the second embodiment as well, the control routine for processing for setting the target air-fuel ratio shown in FIG. 9 is performed. Note that, the air-fuel ratio control part may perform the lean control for just a predetermined time. That is, the air-fuel ratio control part may switch the target air-fuel ratio from the lean set air-fuel ratio to the strong rich set air-fuel ratio when a predetermined time elapses from when the lean control is started. The predetermined time is predetermined and is set to a value where, in the lean control, the oxygen storage amount of the upstream side catalyst 20 does not reach the maximum storable oxygen amount.

Further, the air-fuel ratio control part may switch the target air-fuel ratio from the lean set air-fuel ratio to the strong rich set air-fuel ratio when, in the lean control, the estimated value of the oxygen storage amount of the upstream side catalyst 20 rises to the reference amount. The reference amount is predetermined and is set to a value smaller than the maximum storable oxygen amount of the upstream side catalyst 20. The estimated value of the oxygen storage amount of the upstream side catalyst 20 is calculated based on the air-fuel ratio detected by the upstream side air-fuel ratio sensor 40 or the target air-fuel ratio of the inflowing exhaust gas, fuel injection amount of the fuel injector 11, etc. If such alternative control is performed, at the time of end of the lean control, i.e., at the time of start of the rich control, it is possible to keep NO_{X} from flowing out from the upstream side catalyst 20.

### Third Embodiment

An exhaust purification system according to a third embodiment is basically similar in configuration and control to the exhaust purification system according to the first embodiment except for the points explained below. For this reason, below, the third embodiment of the present invention will be explained focusing on parts different from the first embodiment.

If the temperature of the outflowing exhaust gas is high, the ammonia flowing out from the upstream side catalyst 20 is decomposed by the heat of the exhaust gas. For this reason, the higher the temperature of the outflowing exhaust gas, the smaller the amount of ammonia flowing out from the upstream side catalyst 20 and the shorter the time difference between when a change of the concentration of ammonia in the outflowing exhaust gas is detected and when a change of the air-fuel ratio of the outflowing exhaust gas is detected. As a result, even if reducing the rich degree of the target air-fuel ratio of the inflowing exhaust gas when the change of the ammonia concentration is detected, the amount of unburned gas flowing out from the upstream side catalyst 20 is liable to be unable to be suppressed. Therefore, in the third embodiment, the value of the strong rich set air-fuel ratio in the rich control is changed according to the temperature of the outflowing exhaust gas.

The exhaust purification system according to the third embodiment is further provided with a temperature detection part detecting the temperature of the outflowing exhaust gas. In the third embodiment, the ECU 31 functions as the air-fuel ratio control part and the temperature detection part.

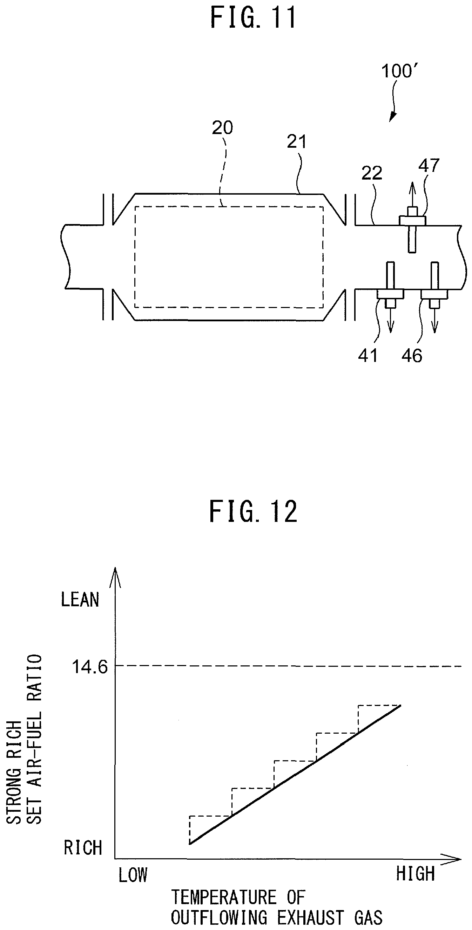

FIG. 11 is a view schematically showing a part of the exhaust passage of the internal combustion engine 100' at which the exhaust purification system of the internal combustion engine 100' according to the third embodiment of the present invention is provided. For example, the temperature detection part uses a temperature sensor 47 to detect the temperature of the outflowing exhaust gas. In this case, the temperature sensor 47 functions as a component of the exhaust purification system. As shown in FIG. 11, the temperature sensor 47 is arranged at the downstream side of the upstream side catalyst 20 in the direction of flow of exhaust, specifically, between the upstream side catalyst 20 and downstream side catalyst 24 in the exhaust pipe 22. The output of the temperature sensor 47 is sent to the ECU 31.

Note that, the temperature detection part may detect the temperature of the upstream side catalyst 20. In this case, the temperature sensor 47 is arranged at the upstream side casing 21 housing the upstream side catalyst 20. Further, the temperature detection part may estimate the temperature of the upstream side catalyst 20 or the outflowing exhaust gas based on the operating state of the internal combustion engine 100'. In this case, the exhaust purification system need not be provided with the temperature sensor 47.

For example, the temperature detection part estimates the temperature of the upstream side catalyst 20 or the outflowing exhaust gas based on the amount of intake air. The amount of intake air is, for example, detected by the air flow meter 39. The temperature detection part estimates the temperature of the upstream side catalyst 20 or the outflowing exhaust gas higher the greater the amount of intake air.

The air-fuel ratio control part reduces the rich degree of the target air-fuel ratio of the inflowing exhaust gas before the output value of the ammonia sensor 46 rises to the reference value in the rich control the higher the temperature detected or estimated by the temperature detection part. In other words, the air-fuel ratio control part sets the strong rich set air-fuel ratio to the lean side (approaching the stoichiometric air-fuel ratio) the higher the temperature detected or estimated by the temperature detection part. Note that, as explained above, the strong rich set air-fuel ratio is a value of a larger rich degree than the weak rich set air-fuel ratio. In the third embodiment, due to this control, it is possible to keep the timing for reducing the rich degree of the target air-fuel ratio of the inflowing exhaust gas from being delayed and a large amount of unburned gas from flowing out from the upstream side catalyst 20. For this reason, it is possible to further suppress deterioration of the exhaust emission. Note that, as explained above, the greater the amount of intake air, the higher the temperature of the upstream side catalyst 20 or outflowing exhaust gas that is estimated, so the air-fuel ratio control part may reduce the rich degree of the target air-fuel ratio of the inflowing exhaust gas before the output value of the ammonia sensor 46 rises to the reference value in the rich control the larger the amount of intake air.

For example, the air-fuel ratio control part uses a map such as shown in FIG. 12 to set the strong rich set air-fuel ratio. In this map, the strong rich set air-fuel ratio is shown as a function of the temperature of the outflowing exhaust gas. As shown by the solid line in FIG. 12, the strong rich set air-fuel ratio is made linearly leaner (made higher) as the temperature of the outflowing exhaust gas rises. Note that, the strong rich set air-fuel ratio, as shown by the broken line of FIG. 12, may be made leaner in stages (in steps) as the temperature of the outflowing exhaust gas rises.

Processing for Setting Strong Rich Set Air-Fuel Ratio

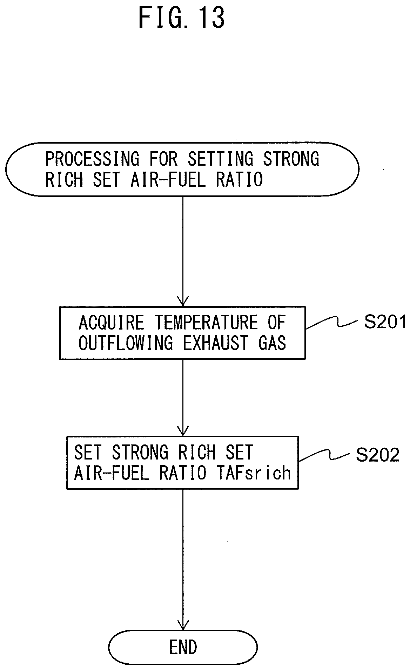

FIG. 13 is a flow chart showing a control routine of processing for setting the strong rich set air-fuel ratio in the third embodiment of the present invention. The present control routine is repeatedly performed by the ECU 31 at predetermined time intervals after the startup of the internal combustion engine 100'.

First, at step S201, the air-fuel ratio control part acquires the temperature of the outflowing exhaust gas. The temperature of the outflowing exhaust gas is detected or estimated by the temperature detection part. Next, at step S202, the air-fuel ratio control part sets the strong rich set air-fuel ratio TAFsrich based on the temperature of the outflowing exhaust gas. For example, the air-fuel ratio control part uses the map such as shown in FIG. 12 to set the strong rich set air-fuel ratio TAFsrich. After step S202, the present control routine ends. Note that, at step S201, the air-fuel ratio control part may acquire the temperature of the upstream side catalyst 20. The temperature of the upstream side catalyst 20 is detected or estimated by the temperature detection part.

In the third embodiment as well, the control routine for processing for setting the target air-fuel ratio shown in FIG. 9 is performed. In the third embodiment, the target air-fuel ratio of the inflowing exhaust gas is set to the strong rich set air-fuel ratio TAFsrich set at step S202 of FIG. 13 from when the rich control is started to when the output value of the ammonia sensor 46 rises to the reference value. Note that, at step S202, the strong rich set air-fuel ratio TAFsrich is set to a value richer than the weak rich set air-fuel ratio TAFwrich at step S104 of FIG. 9.

### Fourth Embodiment

An exhaust purification system according to a fourth embodiment is basically similar in configuration and control to the exhaust purification system according to the first embodiment except for the points explained below. For this reason, below, the fourth embodiment of the present invention will be explained focusing on parts different from the first embodiment.

As explained above, if the temperature of the outflowing exhaust gas is high, the ammonia flowing out from the upstream side catalyst 20 is decomposed by the heat of the exhaust gas. For this reason, if the temperature of the outflowing exhaust gas is extremely high, sometimes a change of the concentration of ammonia in the outflowing exhaust gas cannot be detected. In this case, with the above-mentioned method, the rich degree of the target air-fuel ratio of the inflowing exhaust gas in the rich control cannot be reduced.

For this reason, in the fourth embodiment, in the rich control, the air-fuel ratio control part reduces the rich degree of the target air-fuel ratio of the inflowing exhaust gas when the temperature detected or estimated by the temperature detection part reaches a predetermined temperature, if the temperature of the upstream side catalyst 20 or the temperature of the outflowing exhaust gas detected or estimated by the temperature detection part reaches the predetermined temperature before the output value of the ammonia sensor 46 rises to the reference value. The predetermined temperature is predetermined experimentally or theoretically and is, for example, set within the range of 700° to 750°. In the fourth embodiment, due to this control, a large amount of unburned gas can be kept from flowing out from the upstream side catalyst 20 when the temperature of the outflowing exhaust gas is extremely high, so deterioration of the exhaust emission can be suppressed much more.

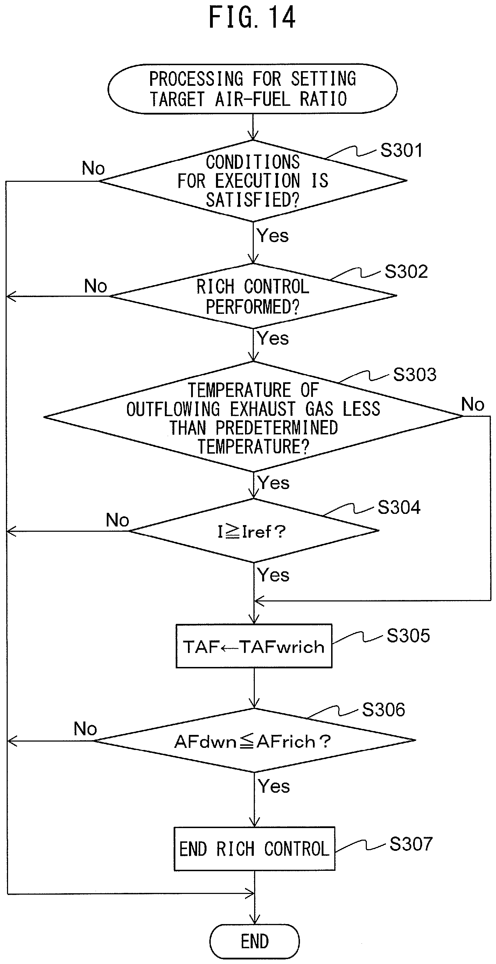

Processing for Setting Target Air-Fuel Ratio FIG. 14 is a flow chart showing the control routine for processing for setting the target air-fuel ratio in the fourth embodiment of the present invention. The present control routine is repeatedly performed by the ECU 31 at predetermined time intervals after the startup of the internal combustion engine 100. Step S301 and step S302 in FIG. 14 are similar to step S101 and step S102 in FIG. 9, so explanations will be omitted.

If at step S302 it is judged that the rich control is being performed, the present control routine proceeds to step S303. At step S303, the air-fuel ratio control part judges whether the temperature of the outflowing exhaust gas is less than the predetermined temperature. The temperature of the outflowing exhaust gas is detected or estimated by the temperature detection part.

If at step S303 it is judged that the temperature of the outflowing exhaust gas is less than the predetermined temperature, the present control routine proceeds to step S304. Step S304 to step S307 are similar to step S103 to step S106 in FIG. 9, so explanations will be omitted.

On the other hand, if at step S303 it is judged that the temperature of the outflowing exhaust gas is the predetermined temperature or more, the present control routine skips step S304 and proceeds to step S305. At step S305, the air-fuel ratio control part sets the target air-fuel ratio TAF to the weak rich set air-fuel ratio TAFwrich. The subsequent step S306 and step S307 are similar to step S105 and step S106 in FIG. 9, so explanations will be omitted.

Note that, at step S303, the air-fuel ratio control part may judge whether the temperature of the upstream side catalyst 20 is less than the predetermined temperature. The temperature of the upstream side catalyst 20 is detected or estimated by the temperature detection part.

### Fifth Embodiment

The exhaust purification system according to a fifth embodiment is basically similar in configuration and control to the exhaust purification system according to the first embodiment except for the points explained below. For this reason, below, the fifth embodiment of the present invention will be explained focusing on the parts different from the first embodiment.

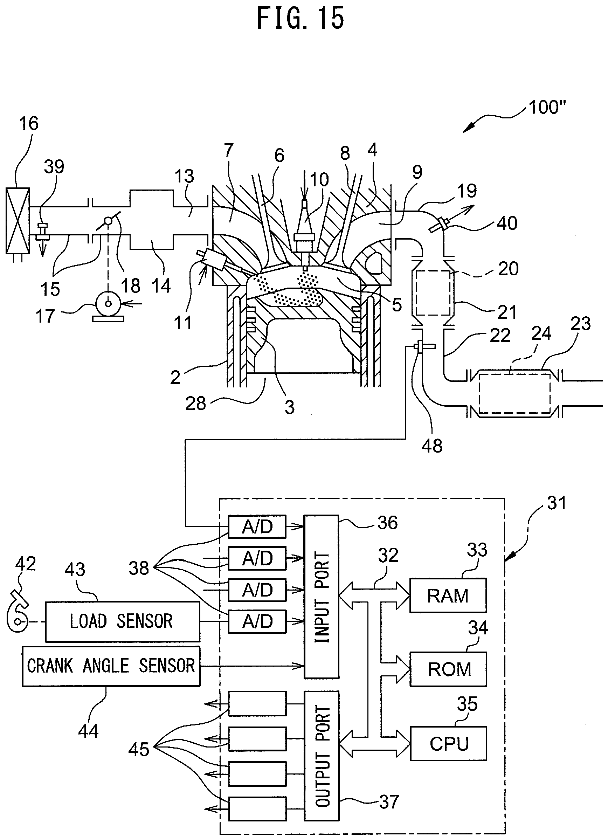

FIG. 15 is a view schematically showing an internal combustion engine 100" provided with an exhaust purification1 system of an internal combustion engine 100" according to the fifth embodiment of the present invention. In the fifth embodiment, inside the exhaust pipe 22, that is, at the downstream side of the upstream side catalyst 20 in the direction of flow of exhaust, a nitrogen oxide sensor (NO_{X} sensor) 48 detecting the concentration of nitrogen oxides (NO_{X} concentration) in the exhaust gas flowing through the exhaust pipe 22 (that is, exhaust gas flowing out from the upstream side catalyst 20) is arranged. The NO_{X} sensor 48 is arranged between the upstream side catalyst 20 and the downstream side catalyst 24 in the direction of flow of exhaust. The output of the NO_{X} sensor 48 is input through the corresponding AD converter 38 to the input port 36.

In the present embodiment, the NO_{X} sensor 48 is a limit current type NO_{X} sensor calculating an NO_{X} concentration in the exhaust gas by detecting a limit current flowing in the sensor when applying a predetermined voltage. The NO_{X} sensor 48 itself is known, so below the configuration of the NO_{X} sensor 48 and the principle of detection of the NO_{X} will be briefly explained.

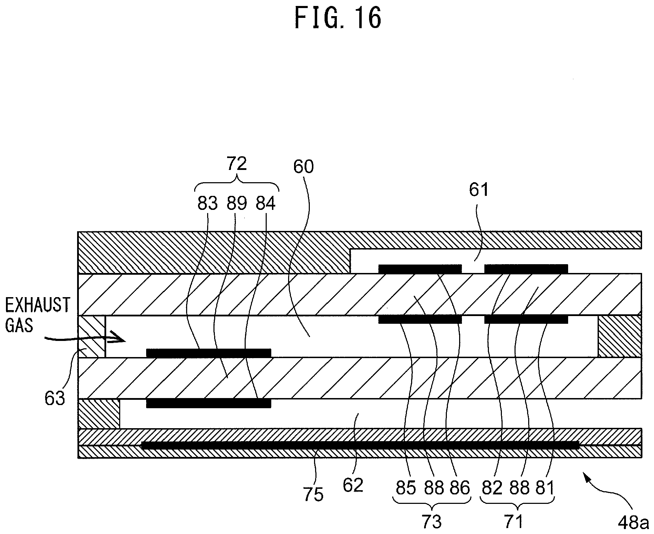

FIG. 16 is a cross-sectional view of a sensor element 48a of an NO_{X} sensor 48. As shown in FIG. 16, the sensor element 48a of the NO_{X} sensor 48 is provided with a measured gas chamber 60, first reference gas chamber 61, second reference gas chamber 62, sensor cell 71, pump cell 72, monitor cell 73, and heater 75. In the measured gas chamber 60, outflowing exhaust gas is introduced as measured gas through the diffusion regulating layer 63. In the first reference gas chamber 61 and second reference gas chamber 62, reference gas is introduced. The reference gas is for example air. In this case, the first reference gas chamber 61 and the second reference gas chamber 62 are opened to the atmosphere.

The sensor cell 71 is an electrochemical cell having a sensor solid electrolyte layer, first electrode 81, and second electrode 82. In the present embodiment, the first solid electrolyte layer 88 functions as the sensor solid electrolyte layer. The first electrode 81 is arranged on the surface of the measured gas chamber 60 side of the first solid electrolyte layer 88 so as to be exposed to the measured gas inside the measured gas chamber 60. On the other hand, the second electrode 82 is arranged on the surface of the first reference gas chamber 61 side of the first solid electrolyte layer 88 so as to be exposed to the reference gas inside the first reference gas chamber 61. The first electrode 81 and second electrode 82 are arranged so as to face each other across the first solid electrolyte layer 88. The first electrode 81 is comprised of a material having an NO_{X} decomposition function.

The pump cell 72 is an electrochemical cell having a pump solid electrolyte layer, third electrode 83, and fourth electrode 84. In the present embodiment, the second solid electrolyte layer 89 functions as the pump solid electrolyte layer. The third electrode 83 is arranged on the surface of the measured gas chamber 60 side of the second solid electrolyte layer 89 so as to be exposed to the measured gas inside the measured gas chamber 60. On the other hand, the fourth electrode 84 is arranged on the surface of the second reference gas chamber 62 side of the second solid electrolyte layer 89 so as to be exposed to the reference gas inside the second reference gas chamber 62. The third electrode 83 and the fourth electrode 84 are arranged so as to face each other across the second solid electrolyte layer 89. The third electrode 83 is comprised of a material not having an NO_{X} decomposition function.

The monitor cell 73 is an electrochemical cell having a monitor solid electrolyte layer, fifth electrode 85, and sixth electrode 86. In the present embodiment, the first solid electrolyte layer 88 functions as the monitor solid electrolyte layer. Therefore, in the present embodiment, the sensor solid electrolyte layer and monitor solid electrolyte layer are made from a common solid electrolyte layer. The fifth electrode 85 is arranged on the surface of the measured gas chamber 60 side of the first solid electrolyte layer 88 so as to be exposed to the measured gas inside the measured gas chamber 60. On the other hand, the sixth electrode 86 is arranged on the surface of the first reference gas chamber 61 side of the first solid electrolyte layer 88 so as to be exposed to the reference gas inside the first reference gas chamber 61. The fifth electrode 85 and the sixth electrode 86 are arranged so as to face each other across the first solid electrolyte layer 88. The fifth electrode 85 is comprised of a material not having an NO_{X} decomposition function.

As shown in FIG. 16, the pump cell 72 is arranged at the upstream side from the sensor cell 71 in the direction of flow of the measured gas. The monitor cell 73 is arranged between the pump cell 72 and sensor cell 71 in the direction of flow of the measured gas. The heater 75 heats the sensor element 48a, in particular, the sensor cell 71, pump cell 72, and monitor cell 73.

Note that, the specific configuration of the sensor element 48a may differ from the configuration shown in FIG. 16. For example, the sensor solid electrolyte layer, pump solid electrolyte layer, and monitor solid electrolyte layer may be a common solid electrolyte layer or separate solid electrolyte layers.

The NO_{X} concentration in the measured gas is detected as follows using the NO_{X} sensor 48. The outflowing exhaust gas passes through the diffusion regulating layer 63 and is introduced into the measured gas chamber 60 as measured gas. The measured gas introduced to the inside of the measured gas chamber 60 first reaches the pump cell 72.

The measured gas (exhaust gas) includes not only NO_{X} (NO and NO₂), but also oxygen. If the measured gas reaching the sensor cell 71 contains oxygen, current flows to the sensor cell 71 due to the oxygen pumping action. For this reason, if the concentration of oxygen in the measured gas fluctuates, the output of the sensor cell 71 also fluctuates and the precision of detection of the NO_{X} concentration falls. For this reason, in order to make the concentration of oxygen in the measured gas reaching the sensor cell 71 constant, the oxygen in the measured gas is discharged by the pump cell 72 into the second reference gas chamber 62.

A predetermined voltage is applied to the pump cell 72. As a result, the oxygen in the measured gas becomes oxide ions at the third electrode 83. The oxide ions move through the pump solid electrolyte layer (in the present embodiment, second solid electrolyte layer 89) from the third electrode (cathode) 83 to the fourth electrode (anode) 84 and are discharged into the second reference gas chamber 62 (oxygen pumping action). Therefore, the pump cell 72 can discharge oxygen in the measured gas into the second reference gas chamber 62. Further, current corresponding to the concentration of oxygen in the measured gas flows to the pump cell 72. For this reason, by detecting the output of the pump cell 72, it is possible to detect the concentration of oxygen in the measured gas and in turn detect the air-fuel ratio of the measured gas. Therefore, the pump cell 72 can detect the air-fuel ratio of the outflowing exhaust gas.

Further, if the concentration of oxygen in the measured gas is sufficiently reduced by the pump cell 72, the reaction 2NO₂→2NO+O₂ occurs and the NO₂ in the measured gas is reduced to NO. Therefore, before the measured gas reaches the sensor cell 71, the NO_{X} in the measured gas is converted to NO.

The measured gas passing through the pump cell 72 next reaches the monitor cell 73. The monitor cell 73 detects the residual concentration of oxygen in the measured gas. A predetermined voltage is applied to the monitor cell 73. As a result, current corresponding to the concentration of oxygen in the measured gas flows to the monitor cell 73 due to the oxygen pumping action. For this reason, by detecting the output of the monitor cell 73, it is possible to detect the residual concentration of oxygen in the measured gas. The voltage applied to the pump cell 72 is feedback controlled based on the output of the monitor cell 73 so that the residual concentration of oxygen becomes a predetermined low concentration. As a result, the concentration of oxygen in the measured gas reaching the sensor cell 71 is controlled to a certain value.

The measured gas passing through the monitor cell 73 next reaches the sensor cell 71. The sensor cell 71 detects the concentration of NO_{X} in the measured gas by decomposing the NO in the measured gas. A predetermined voltage is applied to the sensor cell 71. As a result, the NO in the measured gas is decomposed by reduction in the first electrode 81 and oxide ions are produced. The oxide ions move through the sensor solid electrolyte layer (in the present embodiment, first solid electrolyte layer 88) from the first electrode (cathode) 81 to the second electrode (anode) 82 and are discharged into the first reference gas chamber 61. Before the measured gas reaches the sensor cell 71, the NO₂ in the measured gas is converted to NO, so current corresponding to the concentration of NO_{X} (NO and NO₂) in the measured gas due to decomposition of NO flows in the sensor cell 71. For this reason, by detecting the output of the sensor cell 71, it is possible to detect the concentration of NO_{X} in the measured gas. Therefore, the sensor cell 71 can detect the concentration of NO_{X} in the outflowing exhaust gas.

Note that, if able to remove almost all of the oxygen in the measured gas by the pump cell 72 or if able to make the concentration of oxygen in the measured gas by the pump cell 72 a substantially constant low concentration, it is not necessary to detect the residual concentration of oxygen in the measured gas by the monitor cell 73. For this reason, NO_{X} sensor 48 may detect the concentration of NO_{X} in the measured gas by the pump cell 72 and sensor cell 71 without being provided with the monitor cell 73.

### Exhaust Purification System of Internal Combustion Engine

The exhaust purification system of the internal combustion engine 100" according to the fifth embodiment of the present invention, like in the first embodiment, is provided with the upstream side catalyst 20, downstream side catalyst 24, ammonia detection device and air-fuel ratio detection device arranged in the exhaust passage at the downstream side of the upstream side catalyst 20 in the direction of flow of exhaust, and air-fuel ratio control part controlling the air-fuel ratio of the inflowing exhaust gas to the target air-fuel ratio. Note that, the exhaust purification system need not be provided with the downstream side catalyst 24.

The sensor cell 71 of the NO_{X} sensor 48 also decomposes the ammonia in the measured gas in addition to the NO_{X} in the measured gas, since the material forming the first electrode 81 has an ammonia decomposition function. For this reason, when the outflowing exhaust gas contains ammonia and does not contain almost any NO_{X}, in the sensor cell 71, only a current corresponding to the concentration of ammonia in the outflowing exhaust gas flows due to decomposition of the ammonia. Therefore, the sensor cell 71 can detect the concentration of ammonia in the outflowing exhaust gas. Further, as explained above, the pump cell 72 of the NO_{X} sensor 48 can detect the air-fuel ratio of the outflowing exhaust gas.

For this reason, in the fifth embodiment, the sensor cell 71 of the NO_{X} sensor 48 functions as the ammonia detection device while the pump cell 72 of the NO_{X} sensor 48 functions as the air-fuel ratio detection device. In the fifth embodiment as well, the control routine for processing for setting the target air-fuel ratio shown in FIG. 9 is performed. In the rich control, the rich degree of the target air-fuel ratio of the inflowing exhaust gas is made smaller.

Note that, in the fifth embodiment, in the same way as the first embodiment, the downstream side air-fuel ratio sensor 41 may be arranged in the exhaust passage of the internal combustion engine 100" at the downstream side of the upstream side catalyst 20 in the direction of flow of exhaust. In this case, instead of the pump cell 72 of the NO_{X} sensor 48, the downstream side air-fuel ratio sensor 41 may function as the air-fuel ratio detection device.

### Other Embodiments

Above, preferred embodiments according to the present invention were explained, but the present invention is not limited to these embodiments and may be modified and changed in various ways within the language of the claims. For example, the upstream side air-fuel ratio sensor 40 may be an oxygen sensor arranged at the upstream side of the upstream side catalyst 20 in the direction of flow of exhaust and detecting that the air-fuel ratio of the inflowing exhaust gas is rich or lean. Similarly, the downstream side air-fuel ratio sensor 41 (air-fuel ratio detection device) may also be an oxygen sensor arranged at the downstream side of the upstream side catalyst 20 in the direction of flow of exhaust and detecting that the air-fuel ratio of the outflowing exhaust gas is rich or lean.

Further, the above-mentioned embodiments may be freely combined. For example, the fifth embodiment can be combined with the second embodiment to the fourth embodiment. In this case, the sensor cell 71 and pump cell 72 of the NO_{X} sensor 48 are used as the ammonia detection device and air-fuel ratio detection device. Further, in the third embodiment or the fourth embodiment, the lean control and the rich control may be alternately performed like in the second embodiment. Further, in the second embodiment or the fourth embodiment, like in the third embodiment, the control routine of the processing for setting the strong rich set air-fuel ratio shown in FIG. 13 may be performed.

### Reference Signs List

20. upstream side catalyst
22. exhaust pipe
31. electronic control unit (ECU)
41. downstream side air-fuel ratio sensor
46. ammonia sensor
48. NO_{X} sensor
71. sensor cell
72. pump cell
100, 100', 100". internal combustion engine

## Claims

1. An exhaust purification system of an internal combustion engine (100, 100', 100") comprising:
a catalyst (20) arranged in an exhaust passage (22) of the internal combustion engine (100, 100', 100") and able to store oxygen;
an ammonia detection device (46, 71) arranged in the exhaust passage (22) at a downstream side of the catalyst (20) in a direction of flow of exhaust;
an air-fuel ratio detection device (41, 72) arranged in the exhaust passage (22) at the downstream side of the catalyst (20) in the direction of flow of exhaust; and
an air-fuel ratio control part configured to control an air-fuel ratio of inflowing exhaust gas flowing into the catalyst (20) to a target air-fuel ratio, wherein
the air-fuel ratio control part is configured to perform rich control making the target air-fuel ratio richer than a stoichiometric air-fuel ratio, in the rich control, reduce a rich degree of the target air-fuel ratio when an output value of the ammonia detection device (46, 71) rises to a reference value, and end the rich control when an air-fuel ratio detected by the air-fuel ratio detection device (41, 72) falls to a rich judged air-fuel ratio richer than the stoichiometric air-fuel ratio.

2. The exhaust purification system of an internal combustion engine (100, 100', 100") according to claim 1, wherein the air-fuel ratio control part is configured to alternately perform lean control making the target air-fuel ratio leaner than the stoichiometric air-fuel ratio and the rich control.

3. The exhaust purification system of an internal combustion engine (100, 100', 100") according to claim 1 or 2, further comprising a temperature detection part configured to detect or estimate a temperature of the catalyst (20) or a temperature of exhaust gas flowing out from the catalyst (20), wherein
the air-fuel ratio control part is configured to reduce the rich degree of the target air-fuel ratio before the output value of the ammonia detection device (46, 71) rises to the reference value in the rich control the higher the temperature detected or estimated by the temperature detection part.

4. The exhaust purification system of an internal combustion engine (100, 100', 100") according to any one of claims 1 to 3, further comprising a temperature detection part configured to detect or estimate a temperature of the catalyst (20) or a temperature of exhaust gas flowing out from the catalyst (20), wherein
in the rich control, if the temperature detected or estimated by the temperature detection part reaches a predetermined temperature before the output value of the ammonia detection device (46, 71) rises to the reference value, the air-fuel ratio control part is configured to reduce the rich degree of the target air-fuel ratio when the temperature detected or estimated by the temperature detection part reaches the predetermined temperature.

5. The exhaust purification system of an internal combustion engine (100") according to any one of claims 1 to 4, wherein the ammonia detection device (71) is a sensor cell (71) of an NO_{X} sensor (48).

6. The exhaust purification system of an internal combustion engine (100") according to claim 5, wherein the air-fuel ratio detection device (72) is a pump cell (72) of the NO_{X} sensor (48).
